(19) Europäisches Patentamt
European Patent Office
Office européen des brevets

(11) Veröffentlichungsnummer: **0 283 973 B1**

(12) **EUROPÄISCHE PATENTSCHRIFT**

(45) Veröffentlichungstag der Patentschrift: **07.10.92**

(51) Int. Cl.⁵: **H02B 1/04**

(21) Anmeldenummer: **88104418.4**

(22) Anmeldetag: **19.03.88**

(54) **Vorrichtung zur Befestigung von Gehäusen in Öffnungen einer Schalttafel oder einer Rastersystemwand.**

(30) Priorität: **26.03.87 DE 3709970**

(43) Veröffentlichungstag der Anmeldung:
**28.09.88 Patentblatt 88/39**

(45) Bekanntmachung des Hinweises auf die
Patenterteilung:
**07.10.92 Patentblatt 92/41**

(84) Benannte Vertragsstaaten:
**AT BE CH DE ES FR GB GR IT LI LU NL SE**

(56) Entgegenhaltungen:
**CH-A- 346 923**
**DE-A- 2 833 823**
**DE-U- 8 619 379**

(73) Patentinhaber: **Apra-Gerätebau Ing. (grad.) Wolfgang Appenzeller und Wilfried Rademacher oHG**

**W-5568 Daun/Vulkaneifel(DE)**

(72) Erfinder: **Kröffges, Norbert
Hauptstrasse 29,
W-5562 Wallscheid(DE)**
Erfinder: **Molitor, Heinrich
Hauptstrasse 46,
W-5441 Muenk(DE)**
Erfinder: **Drobneski, Harwig
Auf dem Bungert 7,
W-5533 Hillesheim,(DE)**
Erfinder: **Rademacher, Wilfried
Holunderweg, 3
W-5568 Daun-Boverath(DE)**

(74) Vertreter: **Boecker, Joachim, Dr.-Ing.
Rathenauplatz 2-8
W-6000 Frankfurt a.M. 1(DE)**

EP 0 283 973 B1

## Beschreibung

Die Erfindung betrifft eine Vorrichtung zur Befestigung von Gehäusen in Öffnungen einer Aufnahmewand, beispielsweise einer Schalttafel oder einer Rastersystemwand, gemäß dem Oberbegriff des Anspruches 1. Bei den Gehäusen handelt es sich vorzugsweise um sogenannte MSR-Geräte, also Geräte für Messen, Steuern und Regeln. Eine solche Befestigungsvorrichtung ist im wesentlichen bekannt aus der DE-AS 15 75 242.

Aus dem DE-GM 86 19 379 ist eine Befestigungsvorrichtung bekannt, bei der das Befestigungselement aus einem flachen, relativ großflächigen ausgestanzten Blechteil besteht, das mit verschiedenen Ausnehmungen und Stegen versehen ist, wobei an den Seitenkanten einiger Ausstanzungen geneigt angeordnete Bereiche vorhanden sind, mit denen das Befestigungselement unter entsprechend geneigte an der Gehäuseseitenwand angeformte hinterschnittene Vorsprünge schiebbar und so am Gehäuse fixierbar ist. Aus der Ebene des flachen Blechteils sind parallele freie Schenkel herausgebogen, welche die Funktion eines Federelementes übernehmen, das sich gegen die Frontwand einer Schalttafel beziehungsweise gegen eine Unterteilungswand in einer Rastersystemwand federnd anlegt. In den Wänden des Gehäuses können flache, das Blechteil aufnehmende Ausnehmungen vorgesehen sein, so daß das flache Blechteil mit Ausnahme der herausgebogenen Federelemente nicht über die äußere Oberfläche der Gehäuseseitenwand hinausragt.

Das Befestigungselement der bekannten Befestigungsvorrichtung ist relativ großflächig und in seiner Formgebung relativ kompliziert, so daß in der Regel an zwei gegenüberliegenden Gehäuseseitenwänden nur je ein Befestigungselement angeordnet ist, das zur Vermeidung einer Verkantung in der Öffnung der Aufnahmewand etwa in der Mitte zwischen den Kanten der betreffenden Gehäuseseitenwand positioniert sein muß. Dies hat zur Folge, daß die Reaktionskräfte, die im eingebauten Zustand des Gehäuses auf die Federelemente wirken, die Seitenwände des Gehäuses nach innen biegen, so daß das Einschieben von Leiterplatten in das Gehäuse wegen des zu geringen Abstandes der gegenüberliegenden Seitenwände Schwierigkeiten bereiten kann. Außerdem ist es unerwünscht, daß die Leiterplatten äußere Kräfte aufnehmen müssen, die zu einem Bruch von Leiterverbindungen auf den Leiterplatten führen können. Bei der bekannten Ausführungsform, bei der die Befestigungselemente in der Seitenwand des Gehäuses versenkt sind, haben die dafür erforderlichen Ausnehmungen in den Seitenwänden außerdem eine unerwünschte Schwächung der Seitenwände zur Folge.

Das aus der DE-AS 15 75 242 bekannte Gehäuse ist Teil eines Einbauinstalationsgerätes, welches aus zwei Hälften und einem Verbindungsrahmen besteht und welches nach Einbau der vom Gehäuse aufzunehmenden Bauteile durch blechverformende Maßnahmen am Verbindungsrahmen fest und bleibend verschlossen wird. Das Gehäuse hat eine flache Form, und an den schmalen Seiten befindet sich je eine in Einbaurichtung verlaufende Nut, die mittig an dieser schmalen Seite angeordnet ist. Die Nut erstreckt sich fast über die gesamte Breite der Schmalseite des Gehäuses. Die Nut ist am Boden mit hintergreifbaren Freiräumen versehen, und in diese Freiräume wird ein im wesentlichen V-förmiger Federbandstreifen eingeschoben, der mit seinem hinteren, um 90 Grad abgebogenen Ende bei der vorgenannten Verformung des Verbindungsrahmens fest mit dem Gehäuse verbunden wird. Auch diese Befestigungsvorrichtung ist relativ raumaufwendig und erfordert relativ dicke Seitenwände zur Aufnahme der relativ tiefen Nut mit ihren unteren Hinterschneidungen. Ein Austausch unbrauchbar gewordener Federbandstreifen ist nicht möglich.

Aus der EP-OS 170 814 ist eine Befestigungsvorrichtung für Schalttafelgeräte bekannt, bei der am Gehäuse angebrachte Befestigungsfedern sehr großflächig und kompliziert aufgebaut sind. Sie bestehen aus zwei mit speziellen Zähnen versehenen Rastschenkeln, die über einen dritten, kürzeren Schenkel miteinander verbunden sind, mit welchem das Federelement in eine am Gehäuse vorgesehenen parallel zur Schalttafelwand verlaufenden Nut einschiebbar ist. Auch hier liegt die Ebene des flachen Federstahlmaterials parallel zur Ebene der Gehäusewand.

Der Erfindung liegt die Aufgabe zugrunde, eine Befestigungsvorrichtung für Gehäuse der eingangs genannten Art zu entwickeln, die sich durch Einfachheit im Aufbau und gute Verankerung des Gehäuses in der Aufnahmewand auszeichnet und die so beschaffen ist, daß durch sie weder eine Verformung noch Schwächung der Seitenwände des Gehäuses eintritt.

Zur Lösung dieser Aufgabe wird eine Befestigungsvorrichtung gemäß dem Oberbegriff des Anspruches 1 vorgeschlagen, welches erfindungsgemäß die im kennzeichnenden Teil des Anspruches 1 genannten Merkmale hat.

Vorteilhafte Ausgestaltungen der Erfindung sind in den weiteren Ansprüchen genannt.

Die Befestigungsvorrichtung gemäß der Erfindung zeichnet sich durch überraschende Einfachheit und eine sehr stabile Befestigung des Gehäuses in der Aufnahmewand aus. Dadurch, das das Befestigungselement im Kantenbereich der Seitenwände angebracht ist, ist eine Verbiegung von Seitenwänden des Gehäuses durch die auf die Federn wirkenden Reaktionskräfte ausgeschlossen.

Anhand der in den Figuren gezeigten Ausführungsbeispiele soll die Erfindung näher erläutert werden. Es zeigen

Figur 1 ein leeres Gehäuse in Seitenansicht mit einer Befestigungsvorrichtung gemäß der Erfindung,

Figur 2 das Gehäuse in Figur 1 von oben gesehen, wobei auf einer Seite das Befestigungselement entfernt worden ist,

Figur 3 das Gehäuse in Figur 1 von hinten gesehen mit abgenommener Rückwand.

Figur 4 ein Ausführungsbeispiel eines Befestigungselements gemäß der Erfindung in Seitenansicht,

Figur 5 das Befestigungselement in Figur 4 in Draufsicht,

Figur 6 ein in eine Rastersystemwand eingebautes Gehäuse mit einer Reihe anderer Ausführungsformen von Befestigungselementen,

Figur 7 den oberen Teil des Gehäuses in Figur 6 in nicht eingebautem Zustand.

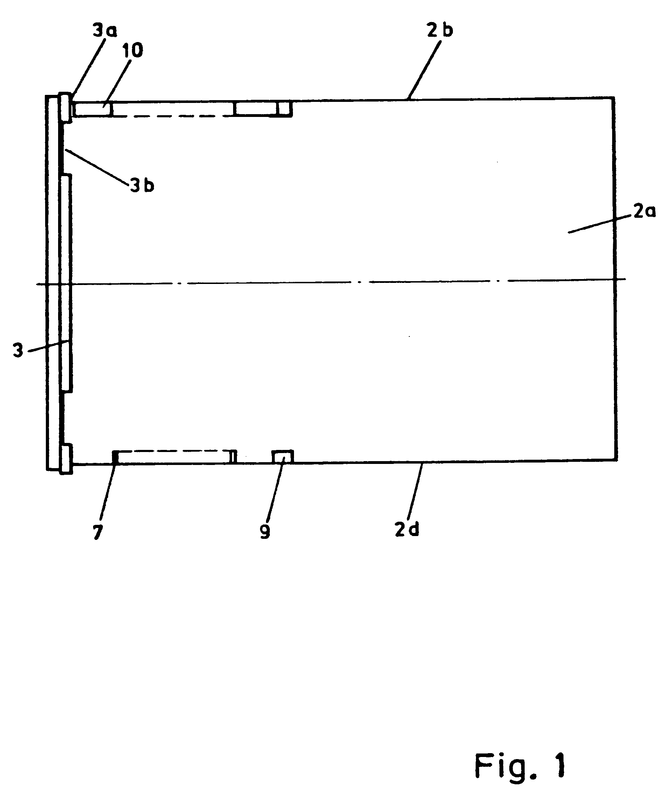

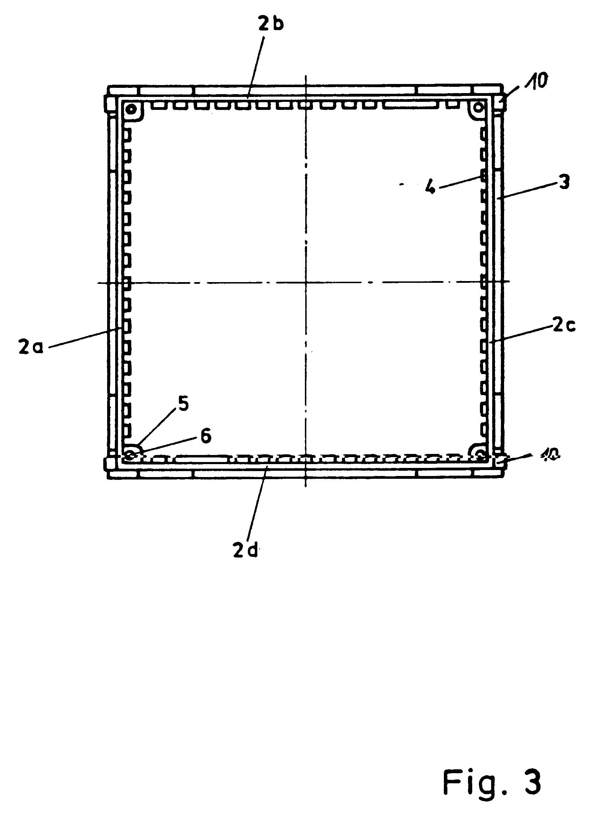

Die Figuren 1 bis 3 zeigen ein aus Kunststoff geformtes, an sich bekanntes MSR-Gehäuse, das aus vier Seitenwänden 2a bis 2d besteht, einer nicht dargestellten Rückwand, einer nicht dargestellten Frontseite und einem nicht dargestellten, auf die Frontseite aufsetzbaren Frontrahmen. Die Seitenwände sind an ihrer Innenseite mit in Richtung von der Frontseite zur Rückseite verlaufenden Stegen 4 versehen, zwischen denen Nuten zur Aufnahme von Einschüben, Leiterkarten und dergleichen gebildet werden. An den Innenkanten zwischen benachbarten Seitenwänden sind Verstärkungsstege 5 angeformt, die sich vorzugsweise über die gesamte Tiefe des Gehäuses erstrecken. In den Stirnseiten dieser Verstärkungsstege sind Befestigungslöcher 6 für die Vorder- und Rückwand vorgesehen, in die vorzugsweise Gewindebuchsen versenkt sind.

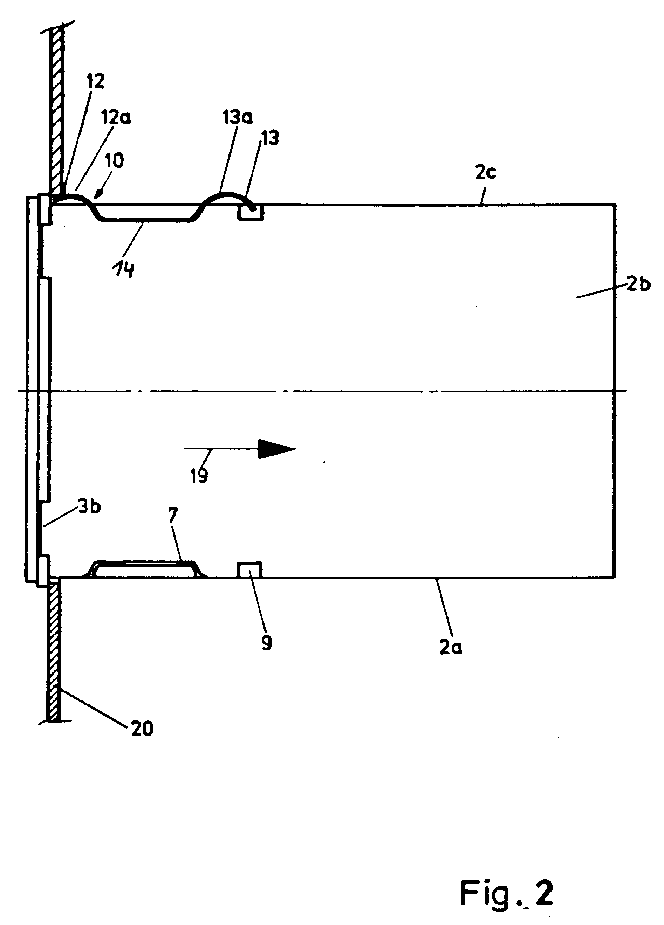

Das Gehäuse wird in Richtung des in Figur 2 gezeigten Pfeils 19 in die Öffnung beispielsweise einer Schalttafel eingeschoben, deren Wand in Figur 2 mit 20 angedeutet ist. Ein anderes Beispiel einer Aufnahmewand für das Gehäuse ist eine Rastersystemwand, die aus einer Vielzahl, nach einem Rastersystem zusammensteckbaren vertikalen und horizontalen Wände (siehe 21 in Figur 6) besteht, deren Wandebenen parallel zur Richtung des Pfeils 19 in Figur 2 liegen. Die Öffnung in der Aufnahmewand ist so bemessen, daß das Gehäuse mit der Kante 3a (Figur 1) eines um die Frontseite verlaufenden Verstärkungsstreifens 3 gegen die vordere Begrenzung der Aufnahmeöffnung anliegt.

In diesem Verstärkungsstreifen sind in Figur 1 und 2 auch Ausnehmungen 3b erkennbar, in die der von vorne aufsetzbare, nicht dargestellte Frontrahmen mit entsprechenden Vorsprüngen einrastet.

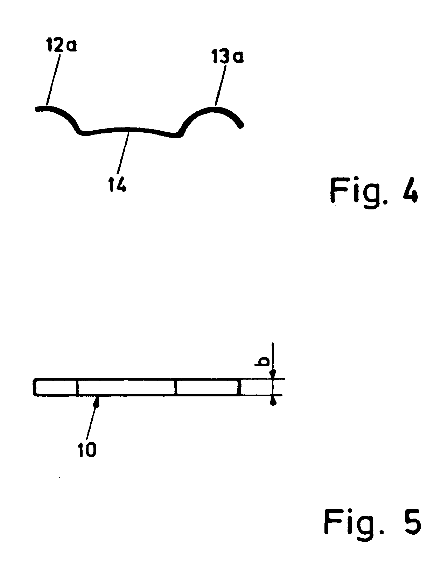

Zur Befestigung des Gehäuses in der Aufnahmewand sind in zwei gegenüberliegenden Seitenwänden 2b,2d im Kantenbereich Nuten 7 vorgesehen, die mit ihren Enden an den benachbarten Gehäuseseiten 2a,2b münden. In diese Nuten ist ein in Figur 4 und Figur 5 dargestelltes, als Federbandstreifen ausgebildetes Befestigungselement 10 hochkant eingesetzt. Die Tiefe der Nuten 7 ist also im wesentlichen gleich der Breite b des Federbandstreifens (Figur 5), und die Breite der Nut 7 braucht nur unwesentlich größer als die Stärke des Federbandmaterials zu sein. Die Nuten liegen im wesentlichen im Bereich der Verstärkungsstege 5, so daß ausreichend Material für ihre Aufnahme vorhanden ist.

Der Federbandstreifen 10 liegt mit einem mittleren Längsabschnitt 14 hochkant in der Nut 7, während seine beiden äußeren Längsabschnitte 12 und 13 aus der benachbarten Seitenwand 2a beziehungsweise 2c heraustreten, wobei diese Längsabschnitte, die die an der Aufnahmewand anliegenden Federelemente bilden, derart bogenförmig verlaufen, daß ihre Enden sich wieder mehr (13a, Figur 4) oder weniger (12a) der Gehäuseseitenwand nähern, wobei diese Annäherung soweit reichen kann, daß die Enden annähernd oder ganz die Begrenzungsfläche der Seitenwand erreichen. Letzteres ist insbesondere für das von der Frontseite aus gesehene zweite Federelement 13 erforderlich, wenn das Gehäuse in eine Rastersystemwand einschiebbar sein soll, deren Seitenwände Vertiefungen oder Löcher aufweisen, in denen das freie Ende des Federelements blockierend anstoßen könnte. Insbesondere in dem letztgenannten Falle empfiehlt es sich, in der Gehäuseseitenwand dort, wo das freie Ende der Federelemente der Seitenwand am nächsten kommt, im Kantenbereich kleine Ausnehmungen 9 vorzusehen, in welche die genannten Enden eintauchen können, so daß ein ausreichend großer Federweg vorhanden ist (siehe Figur 2).

Durch die Befestigung von je zwei Befestigungselementen (10) an zwei gegenüberliegenden Gehäuseseitenwänden des Gehäuses wird eine sehr stabile Anlage in den vier Eckpunkten des Gehäuses erreicht.

Beim Einsetzen des Gehäuses in eine Rastersystemwand liegt das Gehäuse mit den Kuppen 12a und 13a der Federelemente gegen eine Seitenwand der Rastersystemwand an. Durch zwei in Einschubrichtung hintereinander liegende Anlagepunkte 12a,13a wird in einer Rastersystemwand eine sehr stabile Halterung mit insgesamt acht Anlagepunkten geschaffen. Dabei ist der Abstand zwischen den Kuppen 12a und 13a der Federelemente der Tiefe der Seitenwände der Rastersystemwand angepaßt.

Die Befestigungselemente 10 können lose, also ohne weitere Halterung, in die Nuten 7 eingesetzt werden. Um einen festen Sitz zu erreichen und ein Herausfallen zu verhindern, kann das Einsetzen unter Vorspannung erfolgen. Diese Vorspannung wird dadurch erzeugt, daß der Verlauf des Federbandstreifens geringfügig von dem Verlauf der Nut 7 abweicht. Beispielsweise kann der mittlere Längsabschnitt 14 (Figur 4) des Federbandstreifens 10 leicht bogenförmig verlaufen, während der zugehörige Nutabschnitt geradlinig verläuft.

Der Verlauf des Federbandstreifens 10 kann gegenüber dem in Figur 4 und 5 dargestllten Ausführungsbeispiel in vielfacher Weise variiert werden. Der Verlauf kann aus durchgehend bogenförmigen Längsabschnitten bestehen ohne Knickstellen; er kann ganz oder teilweise aus gerade verlaufenden, gegeneinander abgewinkelten Längsabschnitten bestehen oder aus teils bogenförmigen und geraden Längsabschnitten. Es ist auch möglich, das Befestigungselement so auszubilden, daß es nur ein einziges Federelement bildet, wie dies beispielsweise in Figur 6 dargestellt ist, wo zugleich verschiedene Beispiele für den Verlauf der Federbandstreifen gezeigt sind sowie der Einbau des Gehäuses in eine Rastersystemwand 21. Den Federbandstreifen entsprechend verlaufende Nuten sind in der Gehäuseseitenwand eingeformt. Man erkennt , daß der Verlauf des Federbandstreifens in vielfacher Weise gestaltet werden kann. Statt eines Befestigungselements 10 längs einer Kante des Gehäuses können auch zwei oder mehrere längs einer Kante vorgesehen sein.

Der Federbandstreifen 10 besteht in der Regel aus Federstahl. Grundsätzlich sind jedoch auch andere Materialien, wie zum Beispiel Kunststoff, möglich.

**Patentansprüche**

1. Vorrichtung zur Befestigung von Gehäusen in Öffnungen einer Aufnahmewand, beispielsweise einer Schalttafel oder einer Rastersystemwand, wobei die Gehäuse von der Frontseite her in die Öffnungen einschiebbar sind, zu welcher Vorrichtung ein am Gehäuse befestigbares Befestigungselement (10) gehört, welches im am Gehäuse befestigten Zustand ein in Bezug auf eine Gehäuseseitenwand (2c) hervortretendes Federlement (12,13) bildet, welches senkrecht zur Einschubrichtung des Gehäuses elastisch verformbar ist und im eingeschobenen Zustand an den die Einschuböffnung begrenzenden Teilen der Aufnahmewand anliegt, wobei das Befestigungselement aus einem länglichen Federblech (10) besteht, welches mit einem ersten Abschnitt in eine Nut (7) einsetzbar ist, die in einer Gehäuseseitenwand (2b) vorgesehen ist, **dadurch gekennzeichnet**, daß die Nut (7) im Kantenbereich der genannten Gehäuseseitenwand (2b) vorgesehen ist und mit mindestens einem Ende an der dieser Gehäuseseitenwand (2b) benachbarten Gehäuseseitenwand (2a) mündet, daß der Federbandstreifen (10) mit einem ersten Längsabschnitt (14) hochkant in die Nut (7) einsetzbar ist und daß der Federbandstreifen (10) mit mindestens einem zweiten Längsabschnitt (12,13) aus einem Ende der Nut (7) hervorsteht, welcher Längsabschnitt das zur Anlage an die Aufnahmewand dienende Federlement bildet.

2. Befestigungsvorrichtung nach Anspruch 1, **dadurch gekennzeichnet**, daß die aus der Nut (7) herausragenden Längsabschnitte (12,13) des Federbandstreifens (10) mit ihren freien Enden zur Gehäusewand (2c) hin gebogen sind.

3. Befestigungsvorrichtung nach Anspruch 2, **dadurch gekennzeichnet**, daß dort, wo die freien Enden des Federbandstreifens (10) dem Gehäuse am nächsten kommen, im Gehäuse Ausnehmungen (9) zur Aufnahme der genannten freien Enden vorgesehen sind.

4. Befestigungsvorrichtung nach einem der vorhergehenden Ansprüche, **dadurch gekennzeichnet**, daß der Federbandstreifen (10) und die sie aufnehmenden Nuten (7) in Längsrichtung aus bogenförmigen und/oder geradlinigen, gegeneinander abgewinkelten Längsabschnitten bestehen.

5. Befestigungsvorrichtung nach einem der vorhergehenden Ansprüche, **dadurch gekennzeichnet**, daß der Federbandstreifen (10) und die sie aufnehmende Nut (7) aus zwei zueinander symmetrischen Hälften bestehen, wobei jeder äußere Längsabschnitt (12,13) ein Federelement bildet und der Abstand zwischen den beiden Federelementen in Einschubrichtung der Tiefe einer Rastersystemwand angepaßt ist.

6. Befestigungsvorrichtung nach einem der vorhergehenden Ansprüche, **dadurch gekennzeichnet**, daß der Federbandstreifen (10) aus Federstahl oder elastisch verformbarem Kunststoff besteht.

**Claims**

1. Device for mounting housings in the openings of a receiving wall, such as a switchboard or a matrix panel, whereby the housings are inserted from the front side into the openings, which device comprises a fastening element (10) attachable to the housing, which, when attached to the housing, forms a spring element (12,13) protruding from one side wall (2c) of the housing, which spring element is elastically deformable perpendicular to the direction of insertion and which, in the inserted state, abuts against those portions of the receiving wall which define the insertion opening, said fastening element consisting of a longitudinal spring sheet (10), which is insertable with a first portion into a slot (7) provided in one of the side walls (2b) of the housing, **characterized** in that said slot (7) is provided in the edge portion of said side wall (2b) of the housing and opens out with at least one end on that side wall (2a) of the housing which adjoins said side wall (2b) of the housing, that said spring strip (10) is on edge insertable with a first longitudinal portion (14) in said slot (7), and that said spring strip (10) protrudes with at least one second longitudinal portion (12, 13) from one end of the slot (7) said second longitudinal portion forming the spring element which serves to abut against the receiving wall.

2. Mounting device according to claim, **characterized** in that said longitudinal portion (12, 13) of the spring element (10) which protrudes from the slot (7) is curved with its free end towards the wall (2c) of the housing.

3. Mounting device according to claim 2, **characterized** in that, where the free ends of the spring strip (10) approach closest to the housing, the housing is provided with recesses (9) to accommodate said free ends.

4. Mounting device according to any of the preceding claims, **characterized** in that the spring strip (10) and the slots receiving them consists, in the longitudinal direction, of curved and/or straight-lined longitudinal portions forming an angle with one another.

5. Mounting device according to any of the preceding claims, **characterized** in that said spring strip (10) and said receiving slot (7) consist of two halves which are symmetrical to each other, whereby each outer longitudinal portion (12, 13) forms a spring element and the distance between the two spring elements in the direction of insertion is adjusted to the depth of the matrix wall.

6. Mounting device according to any of the preceding claims, **characterized** in that said spring strip (10) consists of spring steel or elastically deformable plastic.

**Revendications**

1. Dispositif de fixation de boîtiers dans des ouvertures d'une paroi de réception, par exemple d'un tableau d'instruments ou d'une paroi à quadrillage, les boîtiers pouvant être insérés dans les ouvertures par le côté frontal, dispositif dont fait partie un élément de fixation (10), qui peut être fixé au boîtier et qui, lorsqu'il est fixé au boîtier, forme un élément élastique (12,13) en saillie par rapport à une paroi latérale (2c) du boîtier, déformable élastiquement et perpendiculairement à la direction d'insertion du boîtier et s'appliquant après insertion aux parties de la paroi de réception délimitant l'ouverture d'insertion, l'élément de fixation étant constitué d'une lame de ressort (10) oblongue qui peut être insérée par un premier tronçon dans une gorge (7) ménagée dans une paroi latérale (2b) du boîtier, caractérisé en ce que la gorge (7) est prévue dans la région du bord de ladite partie latérale (2b) du boîtier et débouche par au moins une extrémité sur la paroi latérale (2a) voisine de cette paroi latérale (2b) du boîtier, en ce que la lame de ressort (10) peut être insérée par un premier tronçon longitudinal (14) sur champ dans la gorge (7) et en ce que la lame de ressort (10) fait saillie par au moins un deuxième tronçon longitudinal (12,13) d'une extrémité de la gorge (7), ce tronçon longitudinal formant l'élément élastique servant à l'appui sur la paroi de réception.

2. Dispositif de fixation selon la revendication 1, caractérisé en ce que les tronçons longitudinaux (12,13) de la lame de ressort (10), qui font saillies de la gorge (7), sont courbés à leur extrémité libre en direction de la paroi (2c) du boîtier.

3. Dispositif de fixation selon la revendication 2, caractérisé en ce que là où les extrémités libres de la lame de ressort (10) vienne le plus près du boîtier, il est prévu dans le boîtier des évidements (9) de réception desdites extrémités libres.

4. Dispositif de fixation selon l'une des revendications précédentes, caractérisé en ce que la lame de ressort (10) et les gorges (7) qui la reçoivent sont constituées, dans la direction longitudinale, de tronçons longitudinaux arqués et/ou rectilignes et coudés l'un par rapport à l'autre.

5. Dispositif de fixation selon l'une des revendications précédentes, caractérisé en ce que la lame de ressort (10) et la gorge (7) qui la reçoit sont constitués de deux moitiés symétriques l'une par rapport à l'autre, chaque tronçon longitudinal (12,13) extérieur formant un élément élastique et la distance entre les deux éléments élastiques dans la direction d'insertion étant adaptée à la profondeur d'une paroi à quadrillage.

6. Dispositif de fixation selon l'une des revendications précédentes, caractérisé en ce que la lame de ressort (10) est en acier pour ressort ou en une matière plastique déformable élastiquement.

Fig. 1

Fig. 2

Fig. 3

**12a** **13a**

**14**

# Fig. 4

b

**10**

# Fig. 5